# EUROPÄISCHE PATENTSCHRIFT

(11) **EP 1 065 428 B1**
(45) Veröffentlichungstag und Bekanntmachung des Hinweises auf die Patenterteilung: **11.08.2004**
(21) Anmeldenummer: 00110343.1
(22) Anmeldetag: 15.05.2000
(51) Int. Cl.: F16L 47/02, B29C 65/34

(54) **Schweissmuffe**
Welding collar
Manchon de soudage

(30) Priorität: 17.06.1999 DE 19927778
(43) Veröffentlichungstag der Anmeldung: 03.01.2001
(73) Patentinhaber: Friatec Aktiengesellschaft, 68229 Mannheim (DE)
(72) Erfinder: Maier, Fabian, 67354 Römerberg (DE); Sichler, Wolfgang, 68239 Mannheim (DE)
(74) Vertreter: Schmitt, Meinrad, Dipl.-Ing.

(56) Entgegenhaltungen:
- DE-U- 29 619 861
- US-A- 4 927 183
- US-A- 5 687 996
- PATENT ABSTRACTS OF JAPAN vol. 018, no. 196 (M-1589), 6. April 1994 (1994-04-06) & JP 06 002797 A (SEKISUI CHEM CO LTD), 11. Januar 1994 (1994-01-11)

## Beschreibung

Die Erfindung bezieht sich auf eine Schweißmuffe gemäß den im Oberbegriff des Patentanspruchs 1 angegebenen Merkmalen.

Eine derartige Muffe aus schweißbarem Kunststoff bzw. einem thermoplastischen Material ist aus der DE-C-196 53 314 bekannt. Diese Elektro-Schweißmuffe enthält einen Muffenkörper, in welchen ein Rohr mit im wesentlichen zylindrischer Außenfläche einschiebbar ist. Der Muffenkörper enthält im Bereich seiner Innenfläche eine Heizwendel oder Heizwicklung aus elektrisch leitendem Draht. Die Schweißmuffe ist als Doppelmuffe ausgebildet und dient zur Verbindung von zwei Rohren. Die mittels der Schweißmuffe zu verbindenden Rohre weisen in der Praxis regelmäßig nicht die ideale, axial langgestreckte Form auf, zumal sie üblicherweise auf großen Trommeln bereitgestellt werden und dementsprechend gebogen sind. Ferner müssen Rohre oftmals mit vergleichsweise geringen Krümmungsradien entsprechend dem Verlauf einer Straße, eines Grabens oder dergleichen gebogen verlegt werden. Um auch unter diesen Bedingungen eine funktionsgerechte Verschweißung zu ermöglichen, weist die Innenfläche der vorbekannten Schweißmuffe zumindest in dem Endbereich zwischen der Heizwendel und dem freien Ende des Muffenkörpers eine polygonale Form auf. Hierdurch wird eine mechanische Klemmung erreicht, welche auch während der Schweißung und der dabei erfolgenden Materialerwärmung im Bereich der Heizwendel derart aufrecht erhalten wird, daß Relativbewegungen oder gar ein Herausziehen des Rohrendes aus der Schweißmuffe während des Schweißens vermieden werden kann. Die Fertigung der polygonalen Innenfläche erfordert einen nicht unerheblichen zusätzlichen Aufwand. Auch können die insbesondere axialen Haltekräfte nur bis zu vergleichsweise niedrigen Grenzen vorgegeben werden, so daß Probleme bei vergrößerten Kräften zu befürchten sind.

Ferner ist aus dem Gebrauchsmuster DE-U-296 19 861 eine Kunststoff-Schweißmuffe bekannt, welche am Muffenende außen ein zusätzliches Spannelement in Form einer Rohrschelle oder dergleichen aufweist. Das Muffenende ist im Bereich des Spannelementes mit wenigstens einem axialen Schlitz versehen, damit beim Festziehen des Spannelements das freie Muffenende auf die Außenfläche des Rohres geklemmt werden kann, um so die Haltekräfte zu erzeugen. Die Fertigung und die Montage der Schweißmuffe erfordern einen zusätzlichen Aufwand, zumal zur Montage das Festspannen des Spannelements mit besonderer Sorgfalt ausgeführt werden muß. Gleichwohl sind Montagefehler nicht mit der erforderlichen Sicherheit auszuschließen, so daß während des Schweißens Relativbewegungen zwischen Rohrende und Schweißmuffe zu Fehlschweißungen führen können.

Schließlich ist aus der JP-A-09 273 690 eine Schweißmuffe bekannt, an deren Enden Zungenstücke mit radial innenliegenden Ausnehmungen vorgesehen sind. Die Ausnehmung dient zur Aufnahme eines Sicherungsbandes, welches auf der Außenfläche des in die Muffe eingeschobenen Rohrendes zur Festlegung desselben befestigbar ist. Das genannte Band enthält Verbindungs- bzw. Verschlußmittel, damit das Band auf der Außenfläche des Rohrendes festgespannt werden kann. Sofern das Band bei der Montage nicht ordnungsgemäß festgespannt wird, ist die Sicherung des Rohrendes bezüglich der Schweißmuffe in der erforderlichen Weise nicht gewährleistet.

Die Schweißmuffe der genannten Art soll dahingehend weitergebildet werden, daß mit geringem Fertigungs- und Montageaufwand eine funktionssichere Verschweißung des in die Muffe eingeschobenen Rohrendes durchführbar ist. Nach dem Einschieben in die Schweißmuffe soll das Rohrende zuverlässig fixiert sein und insbesondere während des Schweißens sollen Relativbewegungen mit hoher Sicherheit vermieden werden. Die Handhabung zur Vorbereitung und Durchführung der Schweißung soll erleichtert werden, wobei insbesondere als Rollenware bereitgestellte Rohre bezüglich der Muffe hinsichtlich Relativbewegungen zuverlässig gesichert sein sollen.

Die Lösung dieser Aufgabe erfolgt gemäß den Merkmalen des Patentanspruchs 1.

Die erfindungsgemäße Schweißmuffe zeichnet sich durch einen einfachen und funktionsgerechten Aufbau aus und ermöglicht bei einfacher Handhabung eine problemlose Herstellung der Schweißverbindung mit dem eingeschobenen Rohrende. Die Schweißmuffe enthält am Ende wenigstens ein derart schwenkbar angeordnetes Halteelement, daß es mit der Rohraußenfläche in Eingriff gelangt und insbesondere eine axiale Relativbewegung des Rohrendes unterbindet. Das oder die Halteelemente können als über den Umfang verteilte Segmente ausgebildet sein, welche in bevorzugter Weise mittels Scharnierteilen mit dem übrigen Muffenkörper verbunden sind. Die Scharnierteile und ebenso das oder die Halteelemente sind in zweckmäßiger Weise einteilig mit dem Muffenkörper ausgebildet und gemeinsam mit diesem durch ein Kunststoff-Spritzverfahren gefertigt. Das Halteelement kann ferner in bevorzugter Weise als ein über den Umfang geschlossener Ring ausgebildet sein, welcher gleichfalls mit dem Muffenkörper über ein Scharnierteil insbesondere einteilig verbunden ist. Im Rahmen der Erfindung können ferner mehrere derartige ringförmige Halteelemente vorgesehen sein, wobei die jeweiligen Scharnierteile über den Umfang versetzt angeordnet sind. So können beispielsweise bei zwei ringförmigen Halteelementen die jeweiligen Scharnierteile diametral liegend angeordnet sein. Die Schwenkachsen des oder der Halteelemente verlaufen insbesondere orthogonal zur Längsachse des Muffenkörpers oder in einer zur Axialebene parallelen Ebene. Das Scharnierteil und das Halteelement sind in zweckmäßiger Weise in einem vorgegebenen axialen Abstand zum Heizelement, das insbesondere als Heizwendel ausgebildet ist, sowie zu einer kalten Zone angeordnet, in deren Bereich praktisch keine Plastifizierung des Materials der Schweißmuffe und des eingeschobenen Rohrendes während des Schweißens erfolgt. Der Innendurchmesser bzw. der innere Radius des Halteelements ist im wesentlichen gleich groß wie der Innendurchmesser bzw. innere Radius der Schweißmuffe im übrigen. Mittels des erfindungsgemäß schwenkbaren Halteelements werden Durchmessertoleranzen zwischen dem Rohraußendurchmesser und dem Muffeninnendurchmesser problemlos ausgeglichen.

Um eine einfache Schwenkbarkeit des oder der Halteelemente sicherzustellen, weisen die Scharnierteile zweckmäßig einen geringeren Querschnitt auf als die Dicke des Muffenkörpers und / oder die radiale Dicke des Halteelements. Ferner können die Halteelemente im Bereich ihrer Innenfläche, welche mit der Außenfläche des Rohrendes in Eingriff gelangt, mit zusätzlichen Haftmitteln versehen sein, welche insbesondere als radiale Vorsprünge, Zähne, als Aufrauhungen oder als Haftbeläge oder dergleichen ausgebildet sind. Falls auf das eingeschobene Rohrende eine insbesondere axiale Auszugskraft einwirkt, unterbinden die mit der Rohraußenfläche in Eingriff stehenden Halteelemente das Herauslösen des Rohrendes aus dem Muffenkörper. Es sei an dieser Stelle festgehalten, daß die erfindungsgemäße Schweißmuffe als Fitting zum Verbinden von zwei Rohrenden, sei es als Doppelmuffe oder als Winkelstück, ebenso ausgebildet sein kann wie als Bestandteil eines Übergangsstückes oder einer Armatur, mit welcher das Rohrende durch Schweißen zu verbinden ist.

Weiterbildungen und besondere Ausgestaltungen der Erfindung sind in den Unteransprüchen sowie der weiteren Beschreibung angegeben.

Die Erfindung wird nachfolgend anhand der in der Zeichnung dargestellten besonderen Ausführungsbeispiele näher erläutert, ohne daß insoweit eine Beschränkung erfolgt. Es zeigen:
- Fig. 1: eine Ansicht der als Doppelmuffe ausgebildeten Schweißmuffe, in welcher ein Rohrende eingeschoben ist,
- Fig. 2: eine Ansicht der Schweißmuffe gemäß Fig. 1 in einer bezüglich der Längsachse um 90° gedrehten Position,
- Fig. 3: eine perspektivische Darstellung der Schweißmuffe gemäß Fig. 1,
- Fig. 4: einen Schnitt durch die Schweißmuffe in einer Axialebene,
- Fig. 5: eine weitere Ausführungsform der Schweißmuffe mit ringförmigen Halteelementen.

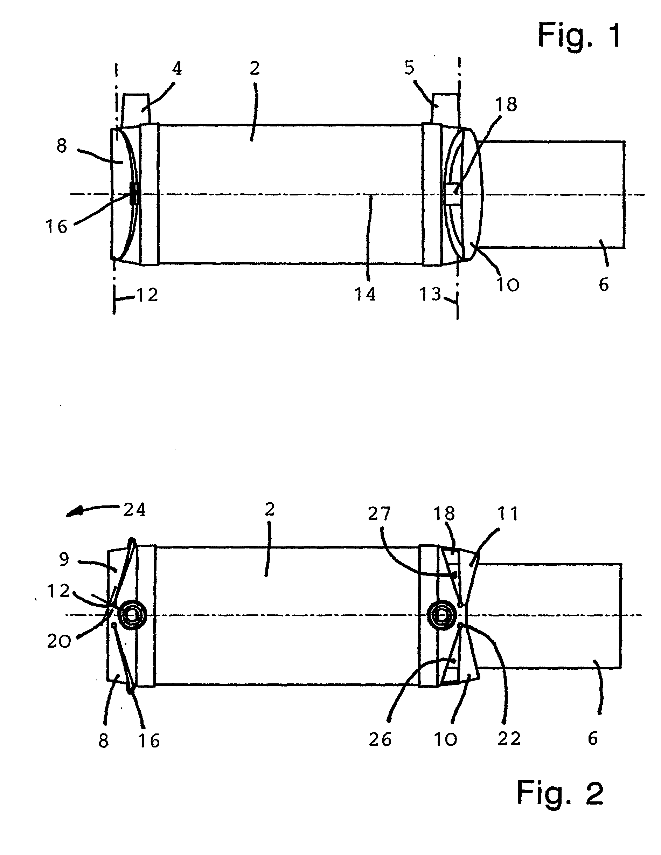

Fig. 1 zeigt die als Doppelmuffe ausgebildete Schweißmuffe mit einem Muffenkörper 2, dessen Innenfläche ein hier nicht weiter dargestelltes Heizelement, welches insbesondere als Heizwendel ausgebildet ist, aus elektrisch leitfähigem Draht enthält. Die Drahtenden sind in bekannter Weise auf Kontakte bzw. Anschlüsse 4, 5 geführt, über welche mit geeigneten Kabeln der Anschluß an ein Schweißgerät durchführbar ist. Der Muffenkörper 2 und ebenso das in das eine Ende der Muffe eingeschobene Rohr 6 bestehen aus thermoplastischem schweißbarem Werkstoff, wie insbesondere Polyolefin. An den beiden Enden des Muffenkörpers 2 sind Halteelemente 8, 10 angeordnet zur Fixierung und Auszugssicherung der in den Muffenkörper 2 eingeschobenen Rohrenden. Die Halteelemente 8, 10 sind mit dem Muffenkörper 2 über Scharnierteile derart verbunden, daß jene um Schwenkachsen 12, 13 in Richtung der Längsachse 14 bezüglich des Muffenkörpers 2 schwenkbar sind. Den Halteelementen 8, 10 sind Arretierkörper 16, 18 zugeordnet, um die Halteelemente 8, 10 in der vom Muffenkörper 2 weggeschwenkten Position auf dem Ende des eingeschobenen Rohres zu arretieren. In der Zeichnung ist links die nichtgeschwenkte Position des einen Halteelements 8 dargestellt, während rechts der mittels des Arretierkörpers 18 auf dem Ende des eingeschobenen Rohres 6 festgespannte Haltekörper 10 in der vom Muffenkörper 2 weggeschwenkten Position zwecks Auszugssicherung des Rohres 6 dargestellt ist.

Fig. 2 zeigt die Schweißmuffe in einer im Vergleich mit Fig. 1 um 90° um die Längsachse 14 gedrehten Position. An den beiden Muffenenden sind jeweils zwei Halteelemente 8, 9 bzw. 10, 11 vorgesehen, welche mittels den bereits erwähnten Scharnierteilen 20, 22 mit dem Muffenkörper 2 integral verbunden sind. Es sei festgehalten, daß auf der anderen, hinter der Zeichenebene liegenden Seite der Schweißmuffe in übereinstimmender Weise ebenfalls entsprechende Scharnierteile vorhanden sind. Die genannten Scharnierteile definieren die Schwenkachsen 12, 13, welche orthogonal zur Zeichenebene verlaufen und das Wegschwenken der Scharnierteile 8, 9 in Richtung des Pfeiles 24 ermöglichen. In der Zeichnung sind rechts die beiden Halteelemente 10, 11 in der vom Muffenkörper 2 weggeschwenkten und mit dem Rohr 6 in Eingriff befindlichen Position dargestellt. Zwischen dem Muffenkörper 2 und den beiden Halteelementen 10, 11 ist jeweils ein sich nach außen erweiternder Spalt 26, 27 vorhanden. Das hinter der Zeichenebene liegende Scharnierteil liegt bezogen auf die Längsachse 14 über den Umfang um einen Winkel von näherungsweise 180° versetzt zu dem in der Zeichnung dargestellten vorderen Scharnierteil 22. Die Arretierkörper 16, 18, welche zu den genannten Scharnierteilen um 90° versetzt über den Umfang angeordnet sind, sind in der Arretierposition dargestellt.

Zur Montage befinden sich die Scharnierteile zunächst in der gemäß Zeichnung linken, am Muffenkörper 2 anliegenden Position, wobei die genannten Spalte gegen Null gehen. In dieser Position wird das Rohrende in den Muffenkörper 2 eingeschoben. Nachfolgend werden die Halteelemente 10, 11 in die gemäß Zeichnung rechte Position geschwenkt und die Arretierkörper 16, 18 radial nach innen gedrückt, so daß die Halteelemente 10, 11 mit der Außenfläche des eingeschobenen Rohrendes 6 in Eingriff gelangen und verspannt sind. Somit ist eine hochwirksame Auszugssicherung für das Rohrende gewährleistet.

Obgleich die jeweils paarweise an den Rohrenden in der oben erläuterten Weise angeordneten Halteelemente 8, 9 bzw. 10, 11 sich als besonders vorteilhaft erwiesen haben, genügt im Rahmen der Erfindung grundsätzlich auch ein einziges derartiges Halteelement am jeweiligen Muffenkörperende. Alternativ zu den sich jeweils um einen Winkelbereich von näherungsweise 180° am Muffenkörperende erstreckenden Halteelemente können vor allem für größere Rohrdurchmesser erfindungsgemäß aber auch mehrere segmentartige Halteelemente über den Umfang verteilt angeordnet sein. Wie nachfolgend noch zu erläutern ist, können das oder die Halteelemente erfindungsgemäß ferner als über den Umfang geschlossene Ringe ausgebildet sein. Unabhängig von der jeweiligen konstruktiven Ausgestaltung ist es wesentlich, daß das oder die Halteelemente derart schwenkbar sind, daß die Innenfläche und / oder Kanten der Halteelemente mit der Außenfläche des eingeschobenen Rohrendes in Eingriff bringbar sind und im wesentlichen axiale Haltekräfte entgegen der Auszugsrichtung des Rohrendes aus dem Muffenkörper 2 auf das Rohr ausüben. Erfindungsgemäß erfolgt mittels des oder der schwenkbaren Halteelemente ein Toleranzausgleich zwischen Rohraußendurchmesser und Muffeninnendurchmesser bzw. Innendurchmesser der Halteelemente, und ohne besonderen Fertigungsaufwand sowie ohne die Vorgabe von engen Toleranzen wird mit hoher Funktionssicherheit der Eingriff der Halteelemente auf der Rohraußenfläche gewährleistet. Selbst bei großen Durchmesserdifferenzen sind das oder die Halteelemente mit der Außenfläche des eingeschobenen Rohrendes in Eingriff zu bringen, wobei lediglich eine entsprechend vergrößerte Schwenkung der Halteelemente erforderlich ist.

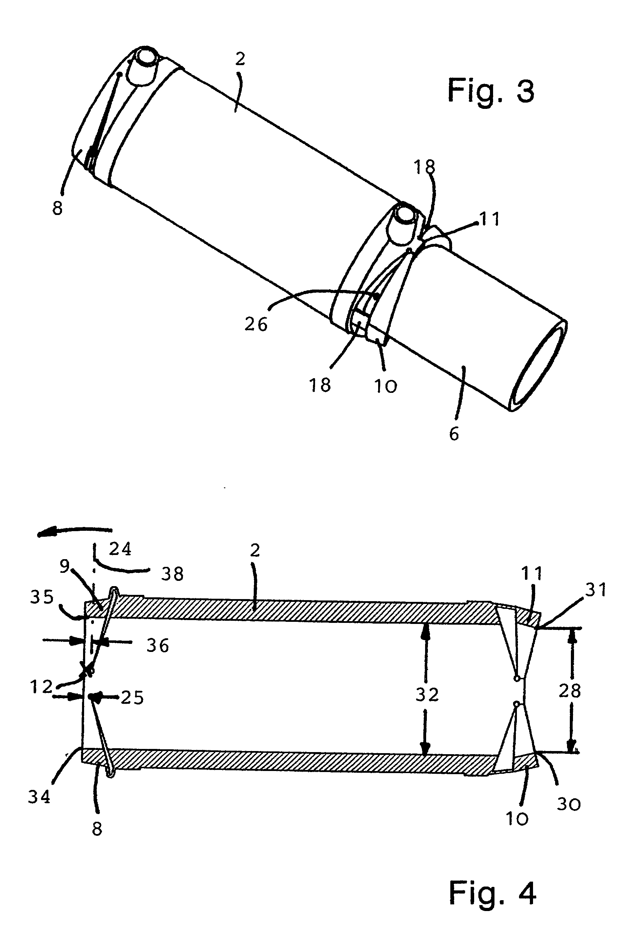

Fig. 3 zeigt in einer perspektivischen Darstellung die Schweißmuffe mit dem in den Muffenkörper 2 eingeschobenen Rohr 6. Die beiden Halteelemente 10, 11 sind vom Muffenkörper 2 weg geschwenkt, wobei der den Spalt 26 überbrückende und in den Spalt 26 hineingedrückte Arretierkörper 18 gut zu erkennen ist. Die axiale Breite 25 des Scharnierteils 20 ist in besonders zweckmäßiger Weise um einen vorgegebenen Betrag kleiner als die Wanddicke des jeweiligen Scharnierteils. Hierdurch ist eine definierte und hinreichend leichte Verschwenkbarkeit der Scharnierteile gewährleistet.

Fig. 4 zeigt die Schweißmuffe in einem axialen Schnitt, wobei wiederum links die beiden am Muffenkörper 2 im wesentlichen anliegenden Halteelemente 8, 9 gut zu erkennen sind. Hingegen sind rechts in der Zeichnung die beiden Halteelemente 10, 11 in der aufgeschwenkten und mittels der Arretierkörper 16, 18 auf das hier nicht dargestellte Rohr aufgepreßte Position. Hierbei ist der Abstand 28 der Innenkanten 30, 31 der Halteelemente 10, 11 ersichtlich kleiner als der Innendurchmesser 32 des Muffenkörpers 2. Wesentlich ist insoweit, daß gemäß dem linken Teil der Zeichnung in der nicht verschwenkten Position der Halteelemente 8, 9 die vorderen freien Innenkanten 34, 35 in einem vorgegebenen Abstand 36 in Schwenkrichtung 24 vor der Radialebene 38 liegt, in welcher sich die Schwenkachse 12 befindet. Dies gilt entsprechend auch für die gemäß Zeichnung rechten Halteelemente 10, 11. Somit erfolgt beim Wegschwenken des jeweiligen Halteelements 8-11 eine Radius- bzw. Durchmesserreduzierung mit der Folge, daß die Halteelemente 8-11 mit der Rohraußenfläche in Eingriff gelangen.

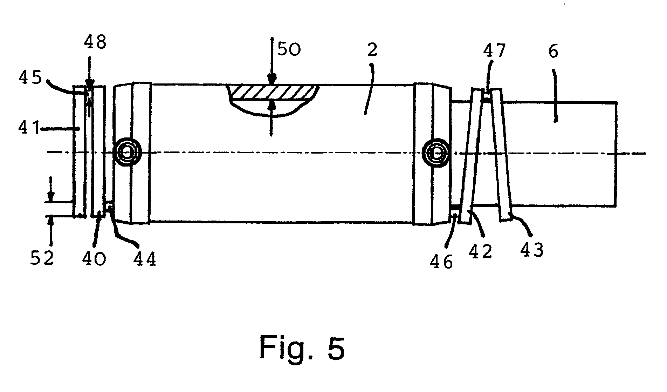

Fig. 5 zeigt die bereits erwähnte besondere Ausführungsform der Schweißmuffe mit jeweils zwei an den Enden des Muffenkörpers 2 angeordneten, ringförmigen Halteelementen 40, 41 bzw. 42, 43, welche wiederum einteilig mit dem Muffenkörper 2 ausgebildet sind. In der Zeichnung ist links die Position der über den Umfang geschlossenen Halteringe bzw. Halteelemente 40, 41 nach der Herstellung der Schweißmuffe dargestellt, während rechts die beiden Halteelemente 42, 43 in der vom Muffenkörper 2 weggeschwenkten Position dargestellt sind. Zur Verbindung mit dem Muffenkörper 2 bzw. der Halteelemente untereinander sind stegförmige Scharnierteile 44-47 vorhanden. Die Scharnierteile 44, 46 stellen die Verbindung zwischen dem Muffenkörper 2 und dem nächstliegenden ringförmigen Halteelement 40, 42 her, während die beiden anderen Scharnierteile 45, 47 die Verbindung zwischen den beiden jeweils benachbarten Halteelementen 40, 41 bzw. 42, 43 herstellen. Auch bei dieser Ausführungsform sind sowohl die Halteelemente 40-43 als auch die Scharnierteile 44-47 einstückig mit dem Muffenkörper 2 ausgebildet und integrale Bestandteile der Schweißmuffe. Um das Wegschwenken zu erleichtern, weisen die Scharnierteile 44-47 in bevorzugter Weise eine Dicke 48 auf, welche um einen vorgegebenen Faktor kleiner ist als die Wanddicke 50 des Muffenkörpers 2 und / oder die Wanddicke 52 der Halteelemente 40-43. Es ist ohne weiteres ersichtlich, daß auch bei dieser Ausführungsform infolge der weggeschwenkten ringförmigen Halteelemente eine Reduzierung des effektiven Innendurchmessers im Bereich der Halteelemente 40-43 gegeben ist und infolgedessen eine hochwirksame Auszugssicherung für ein eingeschobenens Rohrende gewährleistet ist.

### Bezugszeichen

- 2: Muffenkörper
- 4, 5: Anschlußkontakte
- 6: Rohr
- 8-11: Halteelement
- 12, 13: Schwenkachse
- 14: Längsachse von 2
- 16, 18: Arretierkörper
- 20, 22: Scharnierteil
- 24: Pfeil
- 25: axiale Breite von 20
- 26, 27: Spalt
- 28: Abstand
- 30, 31: Innenkante von 10, 11
- 32: Innendurchmesser von 2
- 34, 35: Innenkante von 8, 9
- 36: Abstand
- 38: Radialebene
- 40-43: ringförmiges Halteelement
- 44-47: stegförmiges Scharnierteil
- 48: Dicke von 44-47
- 50: Wanddicke von 2
- 52: Wanddicke von 40-43

## Patentansprüche

1. Schweißmuffe, enthaltend einen Muffenkörper (2), in welchen ein Rohr (6) einschiebbar ist, und im Bereich der Innenfläche des Muffenkörpers (2) ein insbesondere als Heizwendel ausgebildetes Heizelement zum Verschweißen des in den Muffenkörper (2) eingeschobenen Endes des Rohres (6),
**dadurch gekennzeichnet, daß** der Muffenkörper (2) wenigstens ein um eine Schwenkachse (12, 13) schwenkbares Halteelement (8-11; 40-43) aufweist, welches um eine Schwenkachse (12, 13) derart schwenkbar ist, daß es mit der Außenfläche des Rohres (6) in Eingriff bringbar ist.

2. Schweißmuffe nach Anspruch 1, **dadurch gekennzeichnet, daß** das Halteelement (8-11; 40-43) über Scharnierteile (20, 22; 44-47) mit dem Muffenkörper (2) und/oder einem anderen der genannten Halteelemente verbunden ist.

3. Schweißmuffe nach Anspruch 1 oder 2, **dadurch gekennzeichnet, daß** das Halteelement (8-11; 40-43) und das Scharnierteil (20, 22; 44-47) mit dem Muffenkörper (2) einstückig ausgebildet sind und / oder eine integrale Einheit bilden.

4. Schweißmuffe nach einem der Ansprüche 1 bis 3, **dadurch gekennzeichnet, daß** das Halteelement (8-11) sich über einen vorgegebenen Winkelbereich über den Umfang bezüglich der Längsachse (14) des Muffenkörpers (2) erstreckt.

5. Schweißmuffe nach Anspruch 4, **dadurch gekennzeichnet, daß** das Halteelement (8-11) sich über einen Umfangswinkelbereich von näherungsweise 180° erstreckt.

6. Schweißmuffe nach einem der Ansprüche 1 bis 5, **dadurch gekennzeichnet, daß** das Halteelement (40-43) als ein über den Umfang geschlossener Ring ausgebildet ist und /oder daß am jeweiligen Muffenende wenigstens ein derartiges ringförmiges Halteelement (40-43) angeordnet ist.

7. Schweißmuffe nach Anspruch 6, **dadurch gekennzeichnet, daß** am jeweiligen Muffenende wenigstens zwei ringförmige Halteelemente (40, 41 bzw. 42, 43) axial nebeneinander angeordnet sind.

8. Schweißmuffe nach einem der Ansprüche 1 bis 7, **dadurch gekennzeichnet, daß** das wenigstens ein ringförmiges Halteelement (40, 42) im Anschluß an das jeweilige Ende des Muffenkörpers (2) angeordnet ist, wobei ein einziges, bevorzugt stegförmiges Scharnierteil (40, 42) vorgesehen ist.

9. Schweißmuffe nach einem der Ansprüche 1 bis 8, **dadurch gekennzeichnet, daß** in axialer Richtung an das genannte ringförmige Halteelement (40, 42) das nächste insbesondere ringförmige Halteelement (41, 43) über ein weiteres Scharnierteil (45, 47) anschließt, wobei die dem jeweiligen Ende des Muffenkörpers (2) zugeordneten Scharnierteile (40, 41) bzw. (42, 43) zueinander in Umfangsrichtung um einen vorgegebenen Winkel von bevorzugt im wesentlichen 180° versetzt angeordnet sind.

10. Schweißmuffe nach einem der Ansprüche 1 bis 9, **dadurch gekennzeichnet, daß** die Scharnierteile eine Breite (25) und / oder Dicke (48) aufweisen, welche um einen vorgegebenen Faktor kleiner sind als die Wanddicke (50) des Muffenkörpers (2) und / oder der Halteelemente (40-43).

## Claims

1. A welding collar, containing a collar body (2), into which a tube (6) is insertable, and, in the region of the inner surface of the collar body (2), a heating element, which is implemented as a heating coil in particular, for welding the end of the tube (6) inserted into the collar body (2),
**characterized in that** the collar body (2) has at least one holding element (8-11; 40-43), pivotable around a pivot axis (12, 13), which is pivotable around a pivot axis (12, 13) in such a way that it may be engaged with the outer surface of the tube (6).

2. The welding collar according to Claim 1,
**characterized in that** the holding element (8-11; 40-43) is connected via hinge parts (20, 22; 44-47) to the collar body (2) and/or one of the other holding elements cited.

3. The welding collar according to Claim 1 or 2,
**characterized in that** the holding element (8-11; 40-43) and the hinge part (20, 22; 44-47) are implemented in one piece and/or form an integral unit with the collar body (2).

4. The welding collar according to one of Claims 1 through 3,
**characterized in that** the holding element (8-11) extends over a predetermined angular range around the circumference in relation to the longitudinal axis (14) of the collar body (2).

5. The welding collar according to Claim 4,
**characterized in that** the holding element (8-11) extends around a peripheral angular range of approximately 180°.

6. The welding collar according to one of Claims 1 through 5,
**characterized in that** the holding element (40-43) is implemented as a ring which is closed around the circumference and/or at least one annular holding element (40-43) of this type is positioned on the particular collar end.

7. The welding collar according to Claim 6,
**characterized in that** at least two annular holding elements (40, 41 and/or 42, 43) are positioned next to one another axially on the particular collar end.

8. The welding collar according to one of Claims 1 through 7,
**characterized in that** the at least one annular holding element (40, 42) is positioned adjoining the particular end of the collar body (2), a single, preferably web-shaped hinge part (40, 42) being provided.

9. The welding collar according to one of Claims 1 through 8,
**characterized in that** the proximate, particularly annular holding element (41, 43) adjoins the annular holding element (40, 42) cited in the axial direction via a further hinge part (45, 47), the hinge parts (40, 41) and/or (42, 43) assigned to the particular end of the collar body (2) being positioned offset in relation to one another around the circumference by a predetermined angle, preferably of essentially 180°.

10. The welding collar according to one of Claims 1 through 9,
**characterized in that** the hinge parts have a width (25) and/or thickness (48) which is/are smaller by a predetermined factor than the wall thickness (50) of the collar body (2) and/or of the holding elements (40-43).

## Revendications

1. Manchon de soudage comprenant un corps de manchon (2) dans lequel peut s'engager un tube (6), et, dans la région de la surface intérieure du corps de manchon (2), un élément chauffant se présentant en particulier sous la forme d'un filament, pour souder l'extrémité du tube (6) engagée dans le corps de manchon (2), **caractérisé en ce que** le corps de manchon (2) présente au moins un élément de maintien (8-11 ; 40-43) pivotant autour d'un axe de pivotement (12, 13), et qui peut pivoter autour d'un axe de pivotement (12, 13) de façon à ce qu'il puisse être engagé avec la surface extérieure du tube (6).

2. Manchon de soudage selon la revendication 1, **caractérisé en ce que** l'élément de maintien (8-11 ; 40-43) est raccordé au corps de manchon (2) et/ou à un autre des éléments de maintien précités par l'intermédiaire d'éléments de charnière (20, 22 ; 44-47).

3. Manchon de soudage selon la revendication 1 ou 2, **caractérisé en ce que** l'élément de maintien (8-11 ; 40-43) et l'élément de charnière (20, 22 ; 44-47) sont d'un seul tenant et/ou forment une unité intégrale.

4. Manchon de soudage selon l'une des revendications 1 à 3, **caractérisé en ce que** l'élément de maintien (8-11) s'étend sur une plage angulaire prédéfinie, suivant la circonférence, par rapport à l'axe longitudinal (14) du corps de manchon (2).

5. Manchon de soudage selon la revendication 4, **caractérisé en ce que** l'élément de maintien (8-11) s'étend sur une plage d'angle inscrit d'approximativement 180°.

6. Manchon de soudage selon l'une des revendications 1 à 5, **caractérisé en ce que** l'élément de maintien (40-43) se présente comme un anneau fermé sur la circonférence et/ou **en ce qu'**au moins un élément de maintien annulaire de ce genre (40-43) est placé à l'extrémité respective du manchon.

7. Manchon de soudage selon la revendication 6, **caractérisé en ce qu'**au moins deux éléments de maintien annulaires (40, 41 resp. 42, 43) sont placés axialement l'un à côté de l'autre à l'extrémité respective du manchon.

8. Manchon de soudage selon l'une des revendications 1 à 7, **caractérisé en ce qu'**au moins un élément de maintien annulaire (40, 42) est placé à l'embranchement de l'extrémité respective du corps de manchon (2), un seul élément de charnière (40, 42), de préférence en forme de barrette étant prévu.

9. Manchon de soudage selon l'une des revendications 1 à 8, **caractérisé en ce qu'**est rattaché, dans la direction axiale, à l'élément de maintien annulaire précité (40, 42), par l'intermédiaire d'un autre élément de charnière (45, 47), l'élément de maintien suivant (41, 43), en particulier annulaire, les éléments de charnière (40, 41) resp. (42, 43) correspondants à l'extrémité respective du corps de manchon (2) étant décalés l'un de l'autre dans la direction de la circonférence, d'un angle prédéfini, de préférence, de pratiquement 180°.

10. Manchon de soudage selon l'une des revendications 1 à 9, **caractérisé en ce que** les éléments de charnière présentent une largeur (25) et/ou épaisseur (48) qui sont plus petites, d'un facteur prédéfini, que l'épaisseur de paroi (50) du corps de manchon (2) et/ou des éléments de maintien (40-43).
